# EUROPEAN PATENT APPLICATION

(11) **EP 4 600 863 A1**
(43) Date of publication of application: **13.08.2025**
(21) Application number: 25156024.9
(22) Date of filing: 05.02.2025
(51) Int. Cl.: G06K 7/10, H04B 5/77

(54) **METHODS FOR ASSISTING CARD READER IN CARD SEARCHING, CARD SEARCHING METHODS, AND NFC TAGS**

(30) Priority: 06.02.2024 CN 202410172610
(71) Applicant: Advanced Nova Technologies (Singapore) Holding Pte. Ltd., Singapore 189773 (SG)
(72) Inventor: ZHENG, Weijun, Hangzhou 310000 (CN); DAI, Yuhua, Hangzhou 310000 (CN); WANG, Yujie, Hangzhou 310000 (CN); DING, Baoli, Hangzhou 310000 (CN); JIN, Yan, Hangzhou 310000 (CN)
(74) Representative: Winter, Brandl - Partnerschaft mbB

(57) **Abstract**

One or more embodiments of this specification provide a method for assisting a card reader in card searching, a card searching method, and an NFC tag. The method includes: performing signal detection within a predetermined detection range; generating an excitation signal in a case that a low power card detection (LPCD) signal is detected, where the LPCD signal is sent by a card reader device in a low power card detection mode; and sending the excitation signal, so the card reader device switches from the low power card detection mode to a normal card searching mode.

## Description

### TECHNICAL FIELD

One or more embodiments of this specification relate to the wireless communication field, and in particular, to methods for assisting a card reader in card searching, card searching methods, and NFC tags.

### BACKGROUND

Near field communication (NFC) is a short-range wireless communication technology, and can implement convenient interaction and data transmission between two NFC devices or between an NFC device and an NFC tag.

In a related technology, a mobile device such as a mobile phone can be used as an NFC device with a card reader function to read information in an NFC tag, but a low power card detection (LPCD) mode is usually used in consideration of battery life of the mobile device. In a case that the mobile device approaches the NFC tag, the mobile device switches to a normal card searching mode.

However, the mobile device in the LPCD mode has a reduced sensing distance and a reduced sensing sensitivity to the NFC tag. Consequently, the mobile device cannot switch to the normal card searching mode, thereby significantly reducing a success rate of sensing the NFC tag by the mobile device, and affecting user experience.

### SUMMARY

In view of this, one or more embodiments of this specification provide methods for assisting a card reader in card searching, card searching methods, and NFC tags.

To achieve the above-mentioned objectives, one or more embodiments of this specification provide the following technical solutions:

According to a first aspect of one or more embodiments of this specification, a method for assisting a card reader in card searching is proposed, applied to an NFC tag and including:
performing signal detection within a predetermined detection range;
generating an excitation signal in a case that a low power card detection (LPCD) signal is detected, where the LPCD signal is sent by a card reader device in a low power card detection mode; and
sending the excitation signal, so the card reader device switches from the low power card detection mode to a normal card searching mode.

According to a second aspect of one or more embodiments of this specification, a card searching method is proposed, applied to a card reader device and including:
sending a low power card detection (LPCD) signal in a low power card detection mode; and
switching from the low power card detection mode to a normal card searching mode in a case that an excitation signal is received, where the excitation signal is sent by an NFC tag in a case of detecting the LPCD signal.

According to a third aspect of one or more embodiments of this specification, an NFC tag is proposed, including:
an NFC coil, configured to sense a wireless signal in a predetermined detection range, where the wireless signal includes a low power card detection (LPCD) signal, and the LPCD signal is sent by a card reader device in a low power card detection mode;
an NFC tag chip, connected to the NFC coil, and configured to store written tag data;
an excitation module, connected to the NFC coil, and configured to: in a case that it is determined that the NFC coil senses the LPCD signal, generate an excitation signal and send the excitation signal by using the NFC coil, so the card reader device switches from the low power card detection mode to a normal card searching mode.

According to a fourth aspect of one or more embodiments of this specification, an electronic device is proposed, including a memory, a processor, and a computer program stored in the memory and capable of running on the processor, where the processor implements the method according to the first aspect or the second aspect when executing the computer program.

According to a fifth aspect of one or more embodiments of this specification, a computer readable storage medium is proposed, where a computer program is stored thereon, and the computer program is executed by a processor to implement steps of the method according to the first aspect or the second aspect.

According to a sixth aspect of one or more embodiments of this specification, a computer program product is proposed, including a computer program/instructions, where the method according to the first aspect or the second aspect is implemented when the computer program/instructions are executed by a processor.

In the technical solutions provided in this specification, the NFC tag can perform signal detection within the predetermined detection range, and generate an excitation signal in a case of detecting an LPCD signal sent by the card reader device in the low power card detection mode, so as to excite the card reader device to switch from the low power card detection mode to the normal card searching mode. By using the technical solutions of this specification, the NFC tag can detect an LPCD signal by itself and actively send an excitation signal, so as to ensure that the card reader device can exit the low power mode to perform normal card searching, thereby greatly increasing a success rate of sensing the NFC tag by the mobile device, and improving user experience.

It should be understood that the previous general description and the following detailed description are merely examples and illustrative, and cannot limit the embodiments of this specification.

### BRIEF DESCRIPTION OF DRAWINGS

FIG. 1 is a schematic architectural diagram illustrating a near field communication system, according to an example embodiment.
FIG. 2 is a flowchart illustrating a method for assisting a card reader in card searching, according to an example embodiment.
FIG. 3 is a flowchart illustrating a card searching method, according to an example embodiment.
FIG. 4 is a schematic structural diagram illustrating an NFC tag, according to an example embodiment.
FIG. 5 is a schematic structural block diagram illustrating an excitation module, according to an example embodiment.
FIG. 6 is a timing diagram illustrating a card searching process, according to an example embodiment.
FIG. 7(a) is a schematic diagram illustrating a signal waveform during card searching, according to an example embodiment.
FIG. 7(b) is a schematic diagram illustrating a signal waveform during card searching, according to an example embodiment.
FIG. 7(c) is a schematic diagram illustrating a signal waveform during card searching, according to an example embodiment.
FIG. 8 is a schematic structural diagram illustrating a device, according to an example embodiment.
FIG. 9 is a block diagram illustrating an apparatus for assisting a card reader in card searching, according to an example embodiment.
FIG. 10 is a block diagram illustrating a card searching apparatus, according to an example embodiment.

### DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with one or more embodiments of this specification. On the contrary, the implementations are merely examples of apparatuses and methods that are described in the appended claims in detail and consistent with some aspects of one or more embodiments of this specification.

It is worthwhile to note that, in some other embodiments, the steps of the corresponding method are not necessarily performed in the order shown and described in this specification. In some other embodiments, the method can include more or fewer steps than those described in this specification. In addition, a single step described in this specification may be decomposed into a plurality of steps in some other embodiments for description; and a plurality of steps described in this specification may be combined into a single step for description in some other embodiments.

User information (including but not limited to user equipment information, personal user information, etc.) and data (including but not limited to data used for analysis, stored data, displayed data, etc.) in this specification are information and data that are authorized by a user or that are fully authorized by each party. Furthermore, related data needs to be collected, used, and processed in compliance with relevant laws, regulations and standards of relevant countries and regions, and corresponding operation entries are provided for the user to choose to authorize or reject.

Near field communication (NFC) is a short-range wireless communication technology, and can implement near field communication between two NFC devices, or can implement interaction between an NFC device and an NFC tag, so as to implement data transmission, writing, and reading. Here, the NFC device should be an active device with a card reader function, that is, an NFC card reader. The NFC tag is a passive device, does not actively send any signal or data, and needs to receive an excitation from the active device to work. Therefore, NFC correspondingly has two communication modes: an active mode and a passive mode. The active mode should be corresponding to interaction between two NFC devices. Both an initiating device and a target device are NFC devices. When sending data to the other device, both the initiating device and the target device should actively generate a radio frequency field. The passive mode should be corresponding to interaction between an NFC device and an NFC tag. The NFC device (NFC card reader) serves as an initiating device, which is also referred to as a primary device. The primary device provides a radio frequency field by using energy provided by another power supply device, and sends signal data to the NFC tag used as a target device, which is also referred to as a secondary device. The secondary device responds passively to a signal sent by the primary device and does not generate a radio frequency field.

In a related technology, a mobile device such as a mobile phone that has an NFC card reader function can be used as the NFC device in the passive mode. When the mobile device approaches another NFC tag, a 13.56 MHz radio frequency field is set up therebetween as a near field communication field, and data is transmitted and exchanged by using the communication field. However, because the mobile device faces a battery life problem, a device manufacturer of the mobile device such as a mobile phone sets a goal for low power use for an NFC function, and correspondingly performs a series of low power consumption limitation and optimization on a card reader function of NFC, for example, use of a low power card detection (LPCD) mode. In the LPCD mode, the mobile device disables the radio frequency field in a case that no NFC tag exists around, and only sends a low power detection signal, so as to reduce energy consumption. When the mobile device approaches an NFC tag, the mobile device can detect impact of the NFC tag on a detection signal, and then exit the LPCD mode to search for the NFC tag in a normal mode.

However, currently, when the mobile device uses the LPCD mode to sense the NFC tag, usually an ideal effect cannot be achieved. Because strength of a signal sent by the mobile device in the LPCD mode is relatively weak, an impact amplitude of the NFC tag on the signal is also correspondingly reduced. Consequently, the mobile device cannot determine, by using a change amplitude of the signal, whether an NFC tag exists around. Thus, the mobile device cannot obtain a correct determining result or switch to the normal card searching mode. Then, a success rate of sensing the NFC tag by the mobile device significantly decreases, and user experience is affected.

To alleviate the above-mentioned problem, this specification proposes a method for assisting a card reader in card searching and an NFC tag, the NFC tag can perform signal detection within the predetermined detection range, and generate an excitation signal in a case of detecting an LPCD signal sent by the card reader device in the low power card detection mode, so as to excite the card reader device to switch from the low power card detection mode to the normal card searching mode.

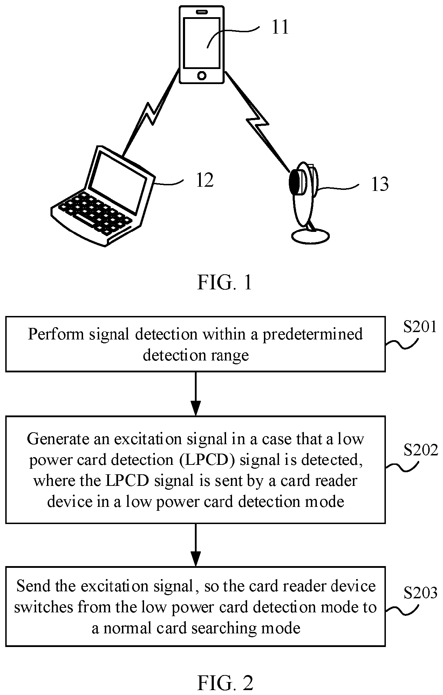

FIG. 1 is a schematic architectural diagram illustrating a near field communication system, according to an example embodiment. As shown in FIG. 1, the system can include a mobile device 11 and several devices equipped with an NFC tag, such as a device 12 and a device 13.

The mobile device 11 should be a type of electronic device with an NFC card reader function that can be used by a user, such as a mobile phone. Actually, the user clearly can further use an electronic device such as the following types: a tablet device, a notebook computer, a personal digital assistant (PDA), a wearable device (such as smart glasses or a smart watch), which is not limited in one or more embodiments of this specification. In a running process, the mobile device can run a program of an application, so as to implement a function of the application related to NFC. For example, when the mobile device runs a payment service application program, payment data in an NFC tag can be sensed, so as to jump to a payment page, so the user completes fast payment.

It is worthwhile to note that an application program of the payment service application can be pre-installed on the mobile device, so the application can be started and run on the mobile device. Certainly, when an online application such as an HTML5 technology is used, the application can be obtained and run without a need to install a corresponding program on the mobile device.

The mobile device 11 and the devices 12-13 equipped with an NFC tag can communicate and transmit data between the devices by using an electromagnetic wave. The devices 12-13 can be any devices equipped with an NFC tag, such as collection terminal devices, payment code cards, electronic door locks, and access control gates. Certainly, in a case that the mobile device is equipped with an NFC tag, the devices 12-13 can alternatively be the above-mentioned mobile devices, which is not limited in this specification.

FIG. 2 is a flowchart illustrating a method for assisting a card reader in card searching, according to an example embodiment. As shown in FIG. 2, the method can be applied to an NFC tag (for example, can be deployed on the devices 12-13 shown in FIG. 1), and can include the following steps:
S201: Perform signal detection within a predetermined detection range.

In an embodiment, the NFC tag should detect all signals within the predetermined detection range, and detected signals may include an LPCD signal. The predetermined detection range should be a maximum range that can be covered by a detection function of the NFC tag. A specific value depends on multiple factors, including power of a signal transceiver, an antenna gain, and an environment condition.

S202: Generate an excitation signal in a case that a low power card detection (LPCD) signal is detected, where the LPCD signal is sent by a card reader device in a low power card detection mode.

In an embodiment, the low power card detection (LPCD) signal is sent by the card reader device in the low power card detection mode, and is used to sense whether an NFC tag exists around. Each signal has a corresponding feature, for example, have different duration and amplitude change trends. Therefore, the NFC tag can determine accordingly whether the LPCD signal sent by the card reader device exists within the predetermined detection range, and generate the excitation signal in a case of determining that the LPCD signal exists. A parameter required for generating the excitation signal can be set by a person skilled in the art according to an actual situation. Generally, the excitation signal can be set to a signal with a frequency band near 13.56 Mhz, for example, a signal with a frequency between 12-15 Mhz. This is not limited in this specification.

S203: Send the excitation signal, so the card reader device switches from the low power card detection mode to a normal card searching mode.

In an embodiment, the NFC tag sends the excitation signal generated in the above-mentioned embodiment, to excite the card reader device to switch from the current low power card detection mode to the normal card searching mode. Specifically, in a case of receiving the excitation signal, the card reader device can also analyze a signal feature of the signal, so as to determine whether the LPCD mode needs to be exited. The normal card searching mode should be a card searching mode with higher power consumption than the LPCD mode. In the normal card searching mode, the card reader sends an activation signal for the NFC tag to expect to obtain a response from the NFC tag. If the NFC tag responds, it can be considered that the NFC tag is activated successfully. Thereafter, data exchange can be performed between the card reader and the NFC tag.

It is worthwhile to note that a sending occasion of the excitation signal does not need to be coordinated with a sending period of the LPCD signal, and the card reader device can receive the excitation signal at any time point, so as to implement mode switching. After detecting the LPCD signal, the NFC tag can immediately generate an excitation signal and send the excitation signal without a special delay. Certainly, a person skilled in the art can set a sending occasion thereof according to actual needs, which is not limited in this specification.

It can be understood from the above-mentioned embodiment that, by using the technical solutions of this specification, the NFC tag can detect an LPCD signal by itself and actively send an excitation signal, so as to ensure that the card reader device can exit the low power mode to perform normal card searching, thereby greatly increasing a success rate of sensing the NFC tag by the mobile device, and improving user experience.

In an embodiment, to ensure that the initiated excitation signal can reach an expected goal, that is, the excitation signal can excite the card reader device to successfully perform mode switching, in a case of detecting the low power card detection (LPCD) signal, the NFC tag can further determine whether the LPCD signal satisfies a condition of requiring the NFC tag to send the excitation signal.

Specifically, the NFC tag can obtain a signal feature of the LPCD signal. Here, similar to each type of signal having a corresponding feature mentioned above, LPCD signals sent by different card reader devices are also different. The signal feature can specifically include a signal interval period, a signal size, signal duration, etc. For example, in a case that signal interval time is different, device A may send an LPCD signal every 200 milliseconds, and device B may send an LPCD signal every 800 milliseconds. In a case that signal sizes are different, an amplitude of the LPCD signal sent by device A may be -20 dBm, and an amplitude of the LPCD signal sent by device B may be -30 dBm. In a case that signal sending policies are different, a difference lies in whether a device performs normal-power card searching once after sending the LPCD signal several times. For example, device A sends only the LPCD signal in the LPCD mode, and device B may send one normal-power activation signal after every four LPCD signals, and then send four LPCD signals, and so on. It is worthwhile to note that, when obtaining the signal feature, the NFC tag can obtain all possible combinations of the above-mentioned one or more features. This specification does not limit types and a quantity of signal features obtained by the NFC tag.

For this embodiment, card reader devices can be classified into two types: When receiving an excitation signal, the first-type card reader device can smoothly switch from the LPCD mode to the normal card searching mode; and when the second-type card reader device receives an excitation signal, the excitation signal may wake up an analog NFC tag preconfigured in the card reader device. For example, some types of mobile phones respond to the excitation signal, and wake up NFC transportation cards, NFC access control cards, etc. in the mobile phones. Consequently, mode switching cannot be performed. In this embodiment, the second-type device is used as a device of a target type, that is, the device of the target type is in the low power card detection mode, and has a risk of waking up a preconfigured analog NFC tag due to reception of the excitation signal. Because there is a difference between LPCD signals sent by different card reader devices, and the difference can be reflected by using signal features of the LPCD signals, in a case that a signal feature of an LPCD signal is obtained, it can be determined whether a card reader device that sends the LPCD signal is a device of the target type. Then, in a case that the card reader device does not belong to the device of the target type, then an excitation signal is generated, so it can be ensured that the initiated excitation signal can excite the card reader device to smoothly perform mode switching to reach an expected goal.

In an embodiment, in a case of detecting a low power card detection (LPCD) signal, the NFC tag can further determine whether a sensing signal exists in an NFC coil corresponding to the NFC tag, and then generate an excitation signal in a case that no sensing signal exists. It can be understood that in a case that a connection is established between the NFC tag and the card reader device and data exchange is performed, the card reader device does not need to perform mode switching again, and the NFC tag does not need to send an excitation signal again. Therefore, whether the NFC tag has established a connection to the card reader device can be determined by determining whether a sensing signal exists in the NFC coil corresponding to the NFC tag. In a case that no sensing signal exists in the NFC coil, that is, in a case that the NFC tag has not established a connection to the card reader device, then an excitation signal is sent, so power consumption of the NFC tag can be effectively optimized. For example, in a case that the NFC tag is equipped for the mobile device, battery life of the mobile device can be prolonged.

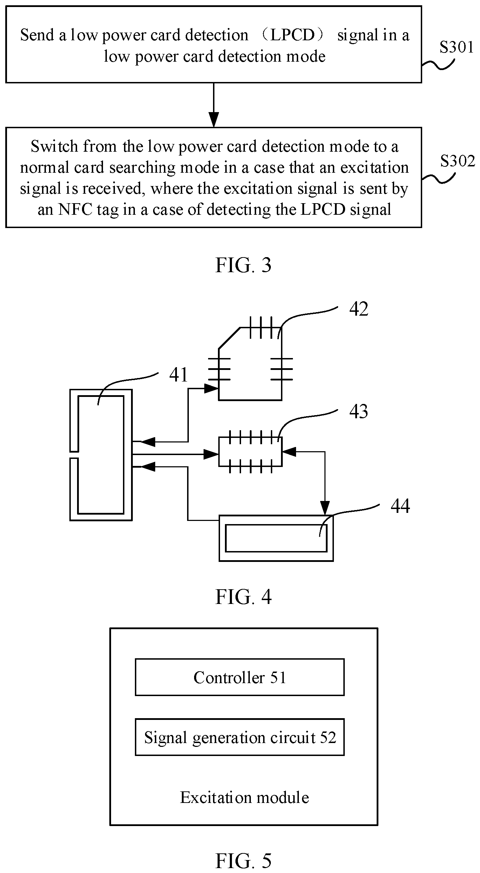

FIG. 3 is a flowchart illustrating a card searching method, according to an example embodiment. As shown in FIG. 3, the method can be applied to a card reader device (for example, can be deployed on the mobile device 11 shown in FIG. 1), and can include the following steps:
S301: Send a low power card detection (LPCD) signal in a low power card detection mode.
S302: Switch from the low power card detection mode to a normal card searching mode in a case that an excitation signal is received, where the excitation signal is sent by an NFC tag in a case of detecting the LPCD signal.

In an embodiment, the card reader device has multiple different card searching modes. In the low power card detection mode, a signal sent by the card reader device is a low power card detection (LPCD) signal. In a case of receiving the excitation signal sent by the NFC tag when detecting the LPCD signal, the card reader device can switch from the low power card detection mode to the normal card searching mode. For related content, refer to related descriptions in the embodiment of the NFC tag side shown in FIG. 1.

It can be understood from the above-mentioned embodiment that, by using the technical solution of this specification, in a low power mode, the card reader device can exit the low power mode to perform normal card searching in response to the excitation signal actively sent by the NFC tag, thereby greatly increasing a success rate of sensing the NFC tag by a mobile device and improving user experience.

FIG. 4 is a schematic structural diagram illustrating an NFC tag, according to an example embodiment, including an NFC coil 41, an NFC tag chip 42, an analog-to-digital converter 43, and an excitation module 44.

In an embodiment, the NFC coil 41 is configured to sense wireless signals within a predetermined detection range. The wireless signals can be multiple types of signals, and include a low power card detection (LPCD) signal. The LPCD signal is sent by a card reader device in a low power card detection mode. For related content, refer to the above-mentioned method embodiment. The NFC tag chip 42 is connected to the NFC coil 41, and is configured to store written tag data. Here, the NFC tag chip should be a secondary device chip that can respond to a signal sent by a primary device (card reader device), and does not actively send any signal or data. The analog-to-digital converter 43 is connected to the NFC coil 41, and is configured to convert an analog signal sensed by the NFC coil into a digital signal. For specific manners of sensing a wireless signal by the NFC coil, storing tag data by the NFC tag chip, and performing signal conversion by the analog-to-digital converter, references can be made to descriptions in related technologies, and details are not described in this specification.

In an embodiment, the excitation module 44 is separately connected to the NFC coil 41 and the analog-to-digital converter 43, and is configured to: in a case that it is determined that the digital signal is an LPCD signal, generate an excitation signal, and send the excitation signal by using the NFC coil 41, so the card reader device switches from the low power card detection mode to a normal card searching mode.

In an embodiment, the excitation module can be implemented by using an NFC card reader chip. The NFC card reader chip is different from the NFC tag chip. As a primary device chip, the NFC card reader chip can generate a radio frequency field and actively send a wireless signal, and is not limited to merely responding to a signal. The excitation module is implemented by using the NFC card reader chip. No additional hardware development is required, which greatly reduces implementation difficulty and development costs.

In another embodiment, the excitation module can be implemented by setting up a hardware circuit. Specifically, referring to FIG. 5, the excitation module includes a controller 51 and a signal generation circuit 52. The controller 51 is connected to the analog-to-digital converter 43 in FIG. 4, and is configured to: obtain and identify the digital signal output by the analog-to-digital converter 43, and send a generation instruction of the excitation signal in a case that it is determined that the digital signal is the LPCD signal. The generation instruction of the excitation signal is used to instruct the signal generation circuit 52 to generate the excitation signal, and the generation instruction can include a generation parameter of the excitation signal, such as duration and a signal size of the excitation signal. The signal generation circuit 52 can generate a qualified excitation signal according to these generation parameters, so as to ensure that the generated excitation signal can achieve an expected effect after being sent. The signal generation circuit 52 is separately connected to the controller 51 and the NFC coil 41, and is configured to: in a case that the generation instruction of the excitation signal sent by the controller 51 is received, generate the excitation signal and send the excitation signal by using the NFC coil 41. This embodiment provides another manner of implementing the excitation module 44. Because the excitation module 44 is implemented by setting up an additional hardware circuit, a person skilled in the art can more conveniently adjust a detail function rather than being limited to an already packaged NFC card reader chip, which has higher flexibility and adaptability.

In an embodiment, the controller 51 can be further configured to: determine a signal feature of the LPCD signal, and send the generation instruction of the excitation signal to the signal generation circuit 52 in a case of determining, according to the signal feature, that the card reader device sending the LPCD signal does not belong to a device of a target type. In another embodiment, the controller 51 can be further configured to: determine whether a sensing signal exists in the NFC coil 41 corresponding to the NFC tag, and send the generation instruction of the excitation signal to the signal generation circuit 52 in a case that the sensing signal does not exist. For related content, refer to related descriptions in the embodiment of the NFC tag side shown in FIG. 1.

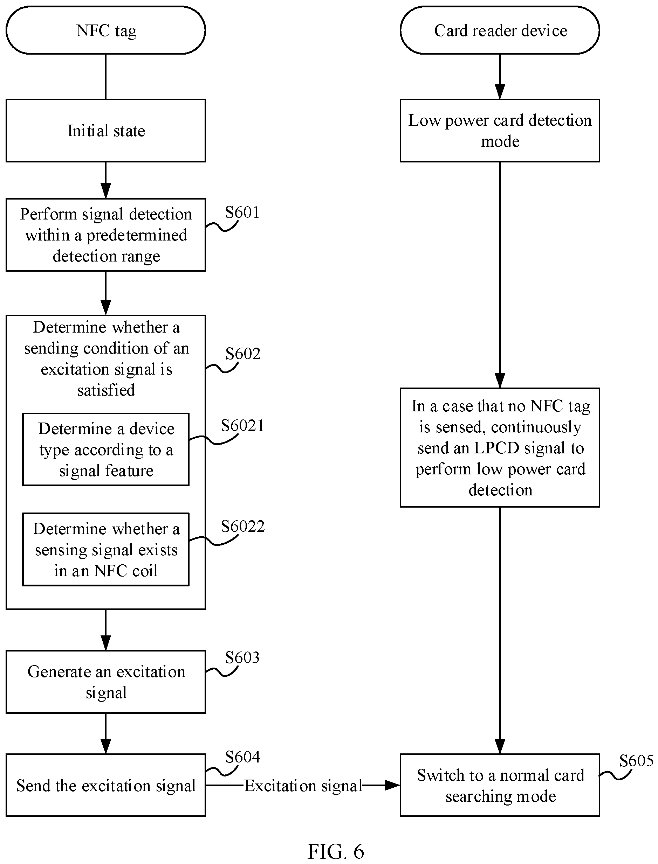

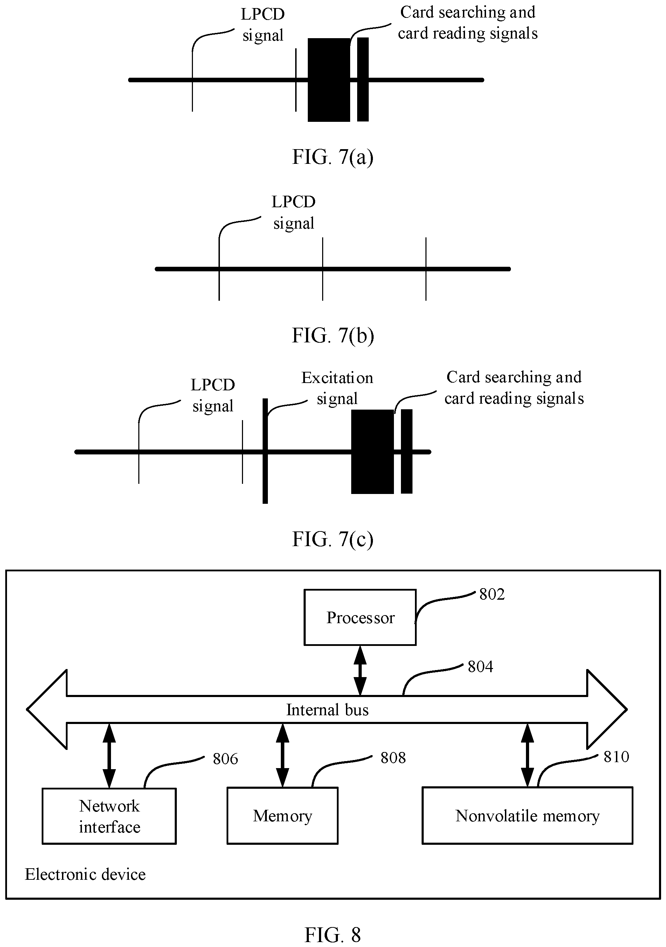

With reference to a timing diagram of card searching shown in FIG. 6 and signal waveform diagrams shown in FIG. 7(a), FIG. 7(b), and FIG. 7(c), the following provides an overall description of a process of the technical solution of this specification.

By default, an NFC tag is in an initial state, and a card reader device is in a low power card detection mode and continuously send low power card detection (LPCD) signals. In this case, if the card reader device approaches the NFC tag, the card reader device should sense that an NFC tag exists around, thereby switching from the low power card detection mode to a normal card searching mode. As shown in FIG. 7(a), after the second LPCD period, the card reader device performs normal card searching and card reading.

However, in the low power card detection mode, the card reader device may be unable to correctly sense that an NFC tag exists around, and therefore, the card reader device continues to send a low power card detection (LPCD) signal. As shown in FIG. 7(b), no sensing succeeds in a plurality of consecutive LPCD periods.

In this case, the NFC tag performs step 601 to perform signal detection within a predetermined detection range; and in a case of detecting the LPCD signal, the NFC tag can continue to perform step 602 to determine whether a sending condition of an excitation signal is satisfied.

Specifically, step 602 includes step 6021 and step 6022. Step 6021 can be first performed to obtain a signal feature of the LPCD signal, and determine whether the LPCD signal is a signal sent by a device that does not belong to a target type. In a case that it is determined that the LPCD signal is a signal sent by a device that does not belong to the target type, step 6022 or step 603 is performed. Certainly, step 6022 can be performed first to determine whether a sensing signal exists in an NFC coil corresponding to the NFC tag, and in a case that the sensing signal does not exist, step 6021 or step 603 is performed.

It is worthwhile to note that step 602 and step 6021 and step 6022 included therein are all optional steps, and a person skilled in the art can select, according to an actual situation, whether to perform these steps.

Thereafter, the NFC tag performs step 603 to generate an excitation signal, and continues to perform step 604 to send the excitation signal. The excitation signal sent by the NFC tag is received by the card reader device, and in response to the excitation signal, the card reader device performs step 605, to switch the low power card detection mode to the normal card searching mode. As shown in FIG. 7(c), sensing by the card reader device does not succeed in the first LPCD period, and the NFC tag actively sends an excitation signal. Thereafter, the card reader device performs normal card searching and card reading. When the card reader device performs card searching in the normal card searching mode, the NFC tag correspondingly sends a card searching response. After receiving the card searching response, the card reader device can establish a communication connection to the NFC tag to perform data exchange.

FIG. 8 is a schematic structural diagram illustrating an electronic device, according to an example embodiment. References are made to FIG. 8. At the hardware level, the device includes a processor 802, an internal bus 804, a network interface 806, a memory 808, and a non-volatile memory 810, and certainly may further include hardware needed by other functions. One or more embodiments of this specification can be implemented based on software. For example, the processor 802 reads a corresponding computer program from the non-volatile memory 810 to the memory 808 and then runs the computer program. Certainly, in addition to software implementations, one or more embodiments of this specification do not preclude other implementations, such as a logic device or a combination of software and hardware. In other words, an execution body of the following processing procedure is not limited to each logical unit, and can be hardware or a logic device.

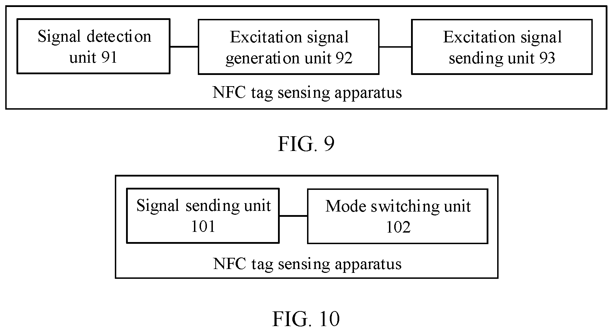

Referring to FIG. 9, an apparatus for assisting a card reader in card searching can be applied to the device shown in FIG. 8, so as to implement the technical solution of this specification. The apparatus for assisting a card reader in card searching is applied to an NFC tag, and can include a signal detection unit 91, an excitation signal generation unit 92, and an excitation signal sending unit 93.

The signal detection unit 91 is configured to perform signal detection within a predetermined detection range;
the excitation signal generation unit 92 is configured to generate an excitation signal in a case that a low power card detection (LPCD) signal is detected, where the LPCD signal is sent by a card reader device in a low power card detection mode; and
the excitation signal sending unit 93 is configured to send the excitation signal, so the card reader device switches from the low power card detection mode to a normal card searching mode.

Optionally, the excitation signal generation unit 92 is specifically configured to:
obtain a signal feature of the LPCD signal; and
generate the excitation signal in a case of determining, according to the signal feature, that the card reader device sending the LPCD signal does not belong to a device of a target type, where in the low power card detection mode, the device of the target type has a risk of waking up a preconfigured analog NFC tag due to reception of the excitation signal.

Optionally, the signal feature of the LPCD signal includes at least one of a signal interval period, a signal size, and signal duration.

Optionally, the excitation signal generation unit 92 is specifically configured to:
determine whether a sensing signal exists in an NFC coil corresponding to the NFC tag; and
generate the excitation signal in a case that the sensing signal does not exist.

Referring to FIG. 10, a card searching apparatus can be applied to the device shown in FIG. 8, so as to implement the technical solution of this specification. The card searching apparatus is applied to a card reader device, and can include a signal sending unit 101 and a mode switching unit 102.

The signal sending unit 101 is configured to send a low power card detection (LPCD) signal in a low power card detection mode; and
the mode switching unit 102 is configured to switch from the low power card detection mode to a normal card searching mode in a case that an excitation signal is received, where the excitation signal is sent by an NFC tag in a case of detecting the LPCD signal.

Because an apparatus embodiment basically corresponds to a method embodiment, for related parts, references can be made to related descriptions in the method embodiment. The described apparatus embodiments are merely examples. The modules described as separate parts may or may not be physically separate, and parts displayed as modules may or may not be physical modules, that is, may be located in one position, or may be distributed on a plurality of network modules. Some or all modules can be selected based on an actual requirement, to achieve objectives of the solutions in embodiments. A person of ordinary skill in the art can understand and implement the solutions without creative efforts.

Correspondingly, this specification further provides a computer readable storage medium, where a computer program is stored thereon, and the computer program is executed by a processor to implement the method described in any one of the above-mentioned embodiments.

Correspondingly, an embodiment of this specification further provides a computer program product, and the computer program product is configured to perform the method in any one of the above-mentioned embodiments.

The system, apparatus, module, or unit illustrated in the above-mentioned embodiments can be specifically implemented by using a computer chip or an entity, or can be implemented by using a product having a specific function. A typical implementation device is a computer, and a specific form of the computer can be a personal computer, a laptop computer, a cellular phone, a camera phone, a smartphone, a personal digital assistant, a media player, a navigation device, an e-mail transceiver device, a game console, a tablet computer, a wearable device, or any combination of several devices in these devices.

In a typical configuration, the computer includes one or more processors (CPU), one or more input/output interfaces, one or more network interfaces, and one or more memories.

The memory may include a non-persistent memory, a random access memory (RAM), a nonvolatile memory, and/or another form that are in a computer-readable medium, for example, a read-only memory (ROM) or a flash memory (flash RAM). The memory is an example of the computer-readable medium.

The computer-readable medium includes a persistent and non-persistent, removable and non-removable medium, and can implement information storage by using any method or technology. Information can be a computer-readable instruction, a data structure, a program module, or other data. Examples of a storage medium of the computer include but are not limited to a phase change random access memory (PRAM), a static RAM (SRAM), a dynamic RAM (DRAM), a random access memory (RAM) of another type, a read-only memory (ROM), an electrically erasable programmable ROM (EEPROM), a flash memory or another memory technology, a compact disc read-only memory (CD-ROM), a digital versatile disc (DVD) or another optical storage, a cassette tape, a magnetic disk storage, a quantum memory, a storage medium based on graphene, another magnetic storage device, or any other non-transmission medium. The storage medium can be configured to store information that can be accessed by a computing device. Based on the definition in this specification, the computer-readable medium does not include transitory media such as a modulated data signal and carrier.

It is also worthwhile to note that terms "include", "comprise" or any other variant thereof is intended to cover non-exclusive inclusion, so processes, methods, products or devices that include a series of elements include not only those elements but also other elements that are not explicitly listed, or elements inherent in such processes, methods, products or devices. Without more constraints, an element preceded by "includes a ..." does not exclude the existence of additional identical elements in the process, method, product or device that includes the element.

Specific embodiments of this specification are described above. Other embodiments fall within the scope of the appended claims. In some cases, the actions or steps described in the claims can be performed in an order different from that in the embodiments, and the desired results can still be achieved. In addition, processes described in the accompanying drawings do not necessarily need a specific order or a sequential order shown to achieve the desired results. In some implementations, multi-tasking and concurrent processing are feasible or may be advantageous.

Terms used in one or more embodiments of this specification are merely used to describe specific embodiments, and are not intended to limit the one or more embodiments of this specification. The terms "a" and "the" of singular forms used in one or more embodiments of this specification and the appended claims are also intended to include plural forms, unless otherwise specified in the context clearly. It should be further understood that the term "and/or" used in this specification indicates and includes any or all possible combinations of one or more associated listed items.

It should be understood that although terms "first", "second", "third", etc. may be used in one or more embodiments of this specification to describe various types of information, the information should not be limited to these terms. These terms are used merely to differentiate information of the same type. For example, without departing from the scope of one or more embodiments of this specification, first information can also be referred to as second information, and similarly, the second information can also be referred to as the first information. Depending on the context, for example, the word "if" used here can be explained as "while", "when", or "in response to determining".

The above-mentioned descriptions are merely example embodiments of one or more embodiments of this specification, but are not intended to limit the one or more embodiments of this specification. Any modification, equivalent replacement, improvement, etc. made without departing from the spirit and principle of the one or more embodiments of this specification shall fall within the protection scope of the one or more embodiments of this specification.

## Claims

1. A method for assisting a card reader in card searching, applied to an NFC tag and comprising:
performing signal detection within a predetermined detection range;
generating an excitation signal in a case that a low power card detection (LPCD) signal is detected, wherein the LPCD signal is sent by a card reader device in a low power card detection mode; and
sending the excitation signal, so the card reader device switches from the low power card detection mode to a normal card searching mode.

2. The method according to claim 1, wherein generating an excitation signal in a case that a low power card detection (LPCD) signal is detected comprises:
obtaining a signal feature of the LPCD signal; and
generating the excitation signal in a case of determining, according to the signal feature, that the card reader device sending the LPCD signal does not belong to a device of a target type, wherein in the low power card detection mode, the device of the target type has a risk of waking up a preconfigured analog NFC tag due to reception of the excitation signal.

3. The method according to claim 2, wherein the signal feature of the LPCD signal comprises at least one of a signal interval period, a signal size, and signal duration.

4. The method according to claim 1, wherein generating an excitation signal in a case that a low power card detection (LPCD) signal is detected comprises:
determining whether a sensing signal exists in an NFC coil corresponding to the NFC tag; and
generating the excitation signal in a case that the sensing signal does not exist.

5. A card searching method, applied to a card reader device and comprising:
sending a low power card detection (LPCD) signal in a low power card detection mode; and
switching from the low power card detection mode to a normal card searching mode in a case that an excitation signal is received, wherein the excitation signal is sent by an NFC tag in a case of detecting the LPCD signal.

6. An NFC tag, comprising:
an NFC coil, configured to sense a wireless signal in a predetermined detection range, wherein the wireless signal comprises a low power card detection (LPCD) signal, and the LPCD signal is sent by a card reader device in a low power card detection mode;
an NFC tag chip, connected to the NFC coil, and configured to store written tag data;
an analog-to-digital converter, connected to the NFC coil, and configured to convert an analog signal sensed by the NFC coil into a digital signal; and
an excitation module, separately connected to the analog-to-digital converter and the NFC coil, and configured to: in a case that it is determined that the digital signal is the LPCD signal, generate an excitation signal and send the excitation signal by using the NFC coil, so the card reader device switches from the low power card detection mode to a normal card searching mode.

7. The NFC tag according to claim 6, wherein the excitation module comprises an NFC card reader chip.

8. The NFC tag according to claim 6, wherein the excitation module comprises:
a controller, connected to the analog-to-digital converter, and configured to obtain and identify the digital signal, and send a generation instruction of the excitation signal in a case that it is determined that the digital signal is the LPCD signal; and
a signal generation circuit, separately connected to the controller and the NFC coil, and configured to: in a case that the generation instruction is received, generate the excitation signal and send the excitation signal by using the NFC coil.

9. The NFC tag according to claim 8, wherein the controller is further configured to:
determine a signal feature of the LPCD signal; and
send the generation instruction of the excitation signal in a case of determining, according to the signal feature, that the card reader device sending the LPCD signal does not belong to a device of a target type, wherein in the low power card detection mode, the device of the target type has a risk of waking up a preconfigured analog NFC tag due to reception of the excitation signal.

10. The NFC tag according to claim 8, wherein the controller is further configured to:
determine whether a sensing signal exists in an NFC coil corresponding to the NFC tag; and
send the generation instruction of the excitation signal in a case that the sensing signal does not exist.

11. An electronic device, comprising a memory and a processor, wherein the memory stores executable instructions that, in response to execution by the processor, causes the electronic device to implement the method according to any one of claims 1 to 5.

12. A computer-readable storage medium comprising instructions stored therein that, when executed by a processor of an electronic device, causes the electronic device to perform the method according to any one of claims 1 to 5.

13. A computer program product comprising instructions stored in a computer-readable storage medium, when executed by a processor of an electronic device, causes the electronic device to perform the method according to any one of claims 1 to 5.

14. An apparatus for assisting a card reader in card searching, applied to an NFC tag and comprising means for performing the steps of the method of any of claims 1 to 5.
